# DEMANDE DE BREVET EUROPEEN

(11) **EP 2 216 587 A1**
(43) Date de publication de la demande: **11.08.2010**
(21) Numéro de dépôt: 10152729.9
(22) Date de dépôt: 05.02.2010
(51) Int. Cl.: F21S 8/00, F21Y 101/02, F21W 101/14

(54) **Feu pour véhicule avec système entretoise pour guide de lumière**

(30) Priorité: 06.02.2009 FR 0950748
(71) Demandeur: Peugeot Citroën Automobiles SA, 78140 Vélizy-Villacoublay (FR)
(72) Inventeur: Peron, Rodolphe, 95220, Herblay (FR)
(74) Mandataire: Vigand, Régis Louis Michel

(57) **Abrégé**

L'invention concerne un feu (20) pour véhicule comprenant plusieurs éléments de guide de lumière (1 ; 11, 12) s'étendant en direction horizontale, agencés les uns en dessous des autres, et fixés à une partie (21 ; 13, 14) du feu aux extrémités (2, 3) des éléments de guide de lumière, **caractérisé en ce qu**'il est prévu au moins un élément de maintien (6, 7) d'au moins certains éléments de guide de lumière entre leurs extrémités.

## Description

La présente invention concerne de manière générale le domaine de l'éclairage et de la signalisation appliqué notamment au véhicule automobile. La présente invention concerne plus particulièrement les feux pour véhicule utilisant des systèmes d'éclairage, en particulier à diodes électroluminescentes (LEDS), qui sont couplés à des barreaux ou guides de lumière, par exemple en polycarbonate, permettant ainsi d'obtenir des effets lumineux.

Il est connu dans l'art antérieur, en particulier du document EP 1 048 893, un feu pour véhicule comportant plusieurs éléments de guide de lumière agencés les uns à côté des autres sur une partie de base d'un boîtier. Les éléments de guide de lumière sont reliés les uns aux autres par des éléments de fixation communs situés aux extrémités des éléments de guide de lumière. Les éléments de guide de lumière s'étendent en direction horizontale de manière équidistante au contour d'une plaque d'éclairement montée en amont dans la direction de diffusion. Les éléments de guide de lumière sont réalisés courbes dans la direction horizontale. Ils sont agencés en décalage et en gradin dans la direction verticale.

Un tel feu pour véhicule automobile présente plusieurs inconvénients et, en particulier, l'utilisation de tels guides lumineux pose la problématique de leur positionnement et de leur tenue dans le feu. En effet une structure d'éléments de guide de lumière telle que présentée dans le document de l'art antérieur susmentionné entraîne un affaissement des éléments de guide de lumière, qui peuvent se déformer sous l'effet combiné de la chaleur à l'intérieur du feu en fonctionnement et du poids de ces éléments de guide. Il a été remarqué dans le cadre de la présente invention, que cet affaissement est d'autant plus critique pour des éléments de guide de lumière courbes dans la direction horizontale. En effet, dans ce cas, l'affaissement est plus important encore dans la zone de courbure des éléments de guide. En outre, il est apparu qu'une structure d'éléments de guide de lumière, telle que présentée dans le cadre de l'art antérieur, entraîne des vibrations et bruits indésirables en phase de roulage du véhicule.

Un but de la présente invention est de répondre aux différents inconvénients de l'art antérieur mentionnés ci-dessus et en particulier, tout d'abord, de fournir un feu pour véhicule comprenant des éléments de guide de lumière dont la tenue et le positionnement sont garantis.

Pour cela un premier aspect de l'invention concerne un feu pour véhicule comprenant plusieurs éléments de guide de lumière s'étendant en direction horizontale, agencés les uns en dessous des autres, et fixés à une partie du feu par des éléments de fixation situés aux extrémités des éléments de guide de lumière, **caractérisé en ce qu**'il est prévu au moins un élément de maintien d'au moins certains éléments de guide de lumière entre leurs extrémités. L'adjonction d'un tel élément de maintien permet non seulement de limiter, voire d'annuler, l'affaissement des éléments de guide de lumière entre leurs extrémités, mais aussi de réduire fortement, voire d'éviter, les vibrations et bruits de ces éléments de guide de lumière pendant les phases de roulage du véhicule.

Dans le cadre de la présente invention, il a été remarqué que l'adjonction d'un élément de maintien entre les extrémités des éléments de guide de lumière pouvait entraîner suivant son positionnement une perturbation de la lumière diffusée. Pour remédier à cela, il est prévu selon un mode de réalisation avantageux, que l'élément de maintien soit positionné à l'arrière des éléments de guide de lumière par rapport à la direction d'éclairage du feu vers l'extérieur du véhicule. L'avantage de ce principe est de pouvoir maintenir le guide de lumière sans avoir besoin de définir des pattes sur celui-ci, ce qui perturberait la lumière qui le traverse. Tandis que le positionnement de l'élément de maintien à l'arrière des éléments de guide de lumière permet de ne pas perturber la lumière qui est envoyée par la source de lumière du feu (par exemple des diodes électroluminescentes) dans ces éléments de guide de lumière.

Selon un autre mode de réalisation avantageux, dans lequel les éléments de guide de lumière sont courbes en direction horizontale, il est prévu que l'élément de maintien soit positionné au niveau de la zone de concavité des éléments de guide de lumière. En effet, il est apparu, toujours dans le cadre de la présente invention, que le risque d'affaissement des éléments de guide de lumière étant plus grand au niveau de leur zone ayant une courbure maximale. C'est pourquoi, le positionnement de l'élément de maintien au niveau de la zone de concavité des éléments de guide de lumière permet non seulement de réduire, voire d'empêcher, leur affaissement tout en ne perturbant pas la diffusion de lumière.

Selon un autre mode de réalisation avantageux, l'élément de maintien comprend des empreintes dans lesquelles viennent se positionner les éléments de guide de lumière. De cette manière, l'élément de maintien détermine exactement l'espacement entre les éléments de guide de lumière tout en assurant une bonne fixation de ces derniers, ce qui a pour effet d'absorber les vibrations du guide et ainsi d'éviter complètement tout bruit que ces éléments de guide de lumière pourraient engendrer lors des phases de roulage du véhicule. Pour cela, les éléments de guide de lumière sont fixés dans les empreintes définies sur l'élément de maintien par une mise en contrainte.

Selon une variante avantageuse, les empreintes comprennent à leur extrémité intérieure une encoche. Lors de l'emmanchement des éléments de guide de lumière dans l'élément de maintien, la mise en contrainte de ces éléments de guide de lumière dans les empreintes correspondantes est avantageusement facilitée par la présente de zones de flexibilité définies par les encoches situées à l'arrière des empreintes, permettant aux parois de ces dernières de s'écarter légèrement.

Selon un autre mode de réalisation avantageux, dans lequel un réflecteur est agencé dans le feu, le réflecteur comprend des trous de passage et l'élément de maintien comprend des pattes de fixation coniques venant se fixer dans les trous de passage du réflecteur. Les pattes de fixation ont une définition conique afin de garantir un bon positionnement au moment de la mise en place de l'élément de maintien sur le réflecteur.

Selon une variante avantageuse, les pattes de fixation sont bouterollées après insertion. De cette manière, les pattes ne pourront plus être extraites des trous de passage assurant ainsi une bonne tenue de l'élément de maintien sur le réflecteur.

Selon un autre mode de réalisation avantageux, dans lequel les éléments de guide de lumière sont en décalage et en gradin les uns par rapport aux autres dans la direction verticale, deux éléments de maintien sont prévus, un premier élément de maintien des éléments de guide de lumière supérieurs et un deuxième élément de maintien des éléments de guide de lumière inférieurs. De cette manière, les deux éléments de maintien permettent de bien délimiter deux fonctions du feu.

Selon un autre mode de réalisation avantageux, la partie du feu, sur laquelle sont fixés les éléments de guide de lumière, est le réflecteur.

Selon un autre mode de réalisation avantageux, les éléments de guide de lumière sont solidaires deux par deux à leurs extrémités par l'intermédiaire d'éléments de liaison.

Selon un autre mode de réalisation avantageux, des diodes électroluminescentes sont positionnées à une extrémité des éléments de guide de lumière

Selon un autre mode de réalisation avantageux, chaque élément de maintien est réalisé sous la forme d'une entretoise venant maintenir au moins deux éléments de guide de lumière. L'utilisation d'une entretoise permet de gérer un écartement régulier entre les éléments de guide de lumière.

D'autres caractéristiques et avantages de la présente invention apparaîtront plus clairement à la lecture de la description détaillée qui suit de modes de réalisation de l'invention donnés à titre d'exemples nullement limitatifs et illustrés par les dessins annexés, dans lesquels :
- la figure 1, déjà décrite, représente des éléments de guide de lumière pour feu de véhicule selon un art antérieur;
- la figure 2 représente des éléments de guide de lumière pour feu de véhicule selon un mode de réalisation de l'invention;
- la figure 3 représente les éléments de guide de lumière selon la figure 2 intégrés dans un feu pour véhicule;
- la figure 4 représente en vue partielle de côté, les éléments de guide de lumière intégrés dans un feu pour véhicule;
- la figure 5 représente une entretoise selon un mode de réalisation préféré de l'invention;
- la figure 6a représente une vue détaillée en perspective avant de l'entretoise de la figure 5;
- la figure 6b représente une vue détaillée en perspective arrière de l'entretoise de la figure 5.

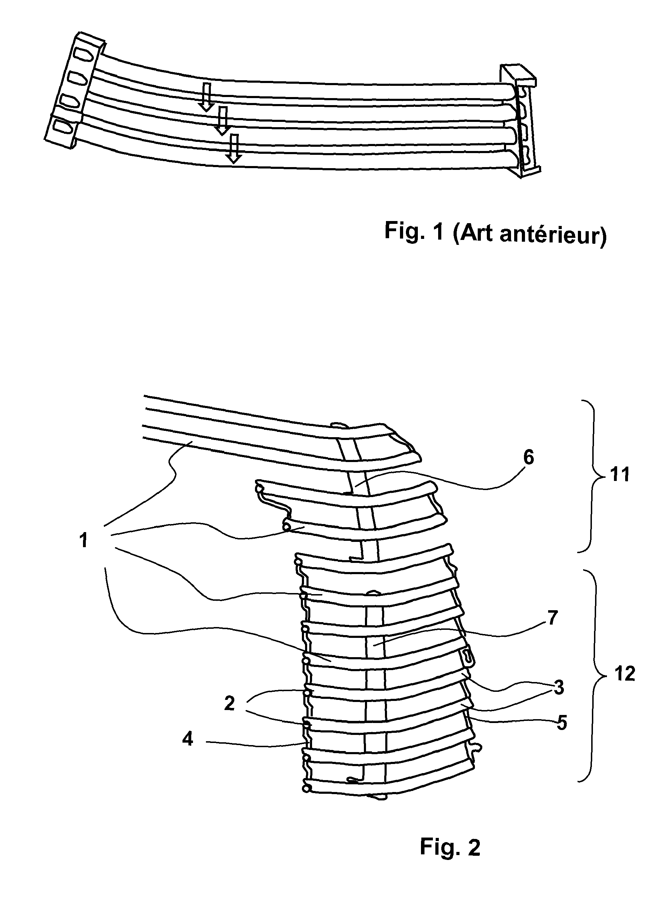

L'invention sera décrite ci-après uniquement à titre d'exemple non limitatif en relation avec les figures 2 à 6b, la figure 1 ayant déjà été décrite en relation avec l'art antérieur. Sur la figure 2, sont représentés des éléments de guide de lumière pour feu de véhicule selon un mode de réalisation de l'invention. Les éléments de guide de lumière 1 sont de préférence réalisés en polycarbonate. Ces éléments de guide de lumière 1 s'étendent sensiblement en direction horizontale, bien qu'il soit possible de prévoir qu'ils forment un léger angle (i.e. inférieur à 10°) avec l'horizontale, et sont agencés les uns en dessous des autres, de préférence en décalage et en gradin les uns par rapport aux autres dans la direction verticale. Aux extrémités 2 et 3 de ces éléments, il peut être prévu des moyens de liaison 4 et 5 permettant de relier deux par deux les éléments de guide de lumière. De tels moyens de liaison renforcent le lien entre les éléments liés ensemble.

De manière à éviter que les différents éléments de guide de lumière 1 ne vibrent et fassent du bruit lors des phases de roulage du véhicule, en raison de l'affaissement observé entre les extrémités des éléments de guide de lumière dans les solutions antérieures, il est prévu au moins un élément de maintien disposé entre les extrémités de ces éléments de guide de lumière, pour les soutenir et maintenir entre eux. Dans l'exemple représenté sur la figure 2, il est prévu avantageusement deux éléments de maintien 6 et 7, disposés entre les extrémités 2 et 3 des éléments de guide de lumière. Le premier élément supérieur de maintien 6 permet de soutenir les éléments supérieurs de guide de lumière 11, tandis que l'élément de maintien inférieur 7 permet de soutenir les éléments inférieurs de guide de lumière 12.

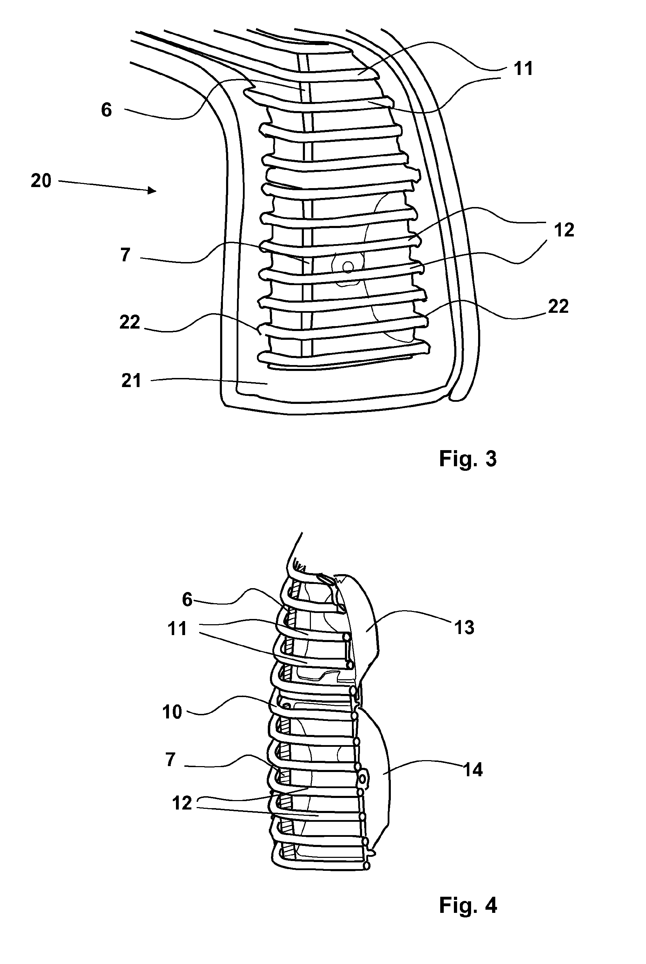

La figure 3 représente un feu 20 pour véhicule dans lequel ont été intégrés des éléments de guide de lumière 11, 12 selon la figure 2. Les éléments de guide de lumière sont fixés à une partie du feu par des éléments de fixation (non visibles) situés aux extrémités des éléments de guide de lumière. De préférence, les éléments de guide de lumière sont fixés sur un réflecteur 21 situé en partie à l'arrière des éléments de guide de lumière par rapport à la direction d'éclairage du feu vers l'extérieur du véhicule.

De manière à éviter au maximum de perturber l'éclairage fourni par un tel feu 20, et plus particulièrement par les éléments 11 et 12 de guide de lumière, les éléments de maintien 6 et 7 sont positionnés à l'arrière des éléments de guide de lumière par rapport à la direction d'éclairage du feu vers l'extérieur du véhicule. De cette manière aucun élément d'attache des éléments de maintien 6 et 7 sur les éléments de guide de lumière ne vient directement perturber la lumière qu'ils émettent.

On notera encore que de préférence le réflecteur 21 comprend de part et d'autre des empreintes latérales 22 destinées à recevoir les éléments de guide de lumière au niveau des extrémités de ces derniers. Ces empreintes 22 permettent non seulement de renforcer le maintien au niveau des extrémités des éléments de guide de lumière, mais également de masquer les moyens de fixation de ces derniers sur le réflecteur ainsi que les moyens de liaison entre eux.

La figure 4 représente en vue partielle de côté, les éléments de guide de lumière 11, 12 intégrés dans un feu 20 pour véhicule. On notera que, de préférence, les éléments de guide de lumière sont courbes en direction horizontale pour suivre la forme générale du feu fréquemment positionné à un angle du véhicule, dans le cas d'un feu arrière.

Dans le cadre de la présente invention, il a été remarqué que le phénomène d'affaissement pour de tels éléments courbes de guide de lumière était d'autant plus important en particulier au niveau de la zone de courbure maximale de ces éléments 11 et 12. Toujours dans l'optique de réduire, voire d'empêcher complètement ce phénomène, il est avantageusement prévu de positionner le ou les éléments de maintien 6, 7 au niveau de la zone de concavité 10 des éléments de guide de lumière 11, 12.

L'utilisation de deux éléments de maintien 6 et 7 distincts maintenant les éléments supérieurs 11, respectivement inférieurs 12, de guide de lumière, présente l'avantage de pouvoir clairement distinguer deux fonctions différentes du feu. Ainsi, de cette manière, comme cela est visible sur l'exemple représenté, les éléments supérieurs de guide de lumière 11 sont associés à un réflecteur supérieur 13, et les éléments inférieurs de guide de lumière sont associés à un réflecteur inférieur 14. En conséquence, la fonction d'éclairage liée aux éléments supérieurs (6, 11, 13) du feu est nettement séparée de la fonction d'éclairage liée aux éléments inférieurs (7, 12, 14) du feu.

On notera aussi que des diodes électroluminescentes (LEDs, non représentées) sont de préférence positionnées à une extrémité des éléments de guide de lumière.

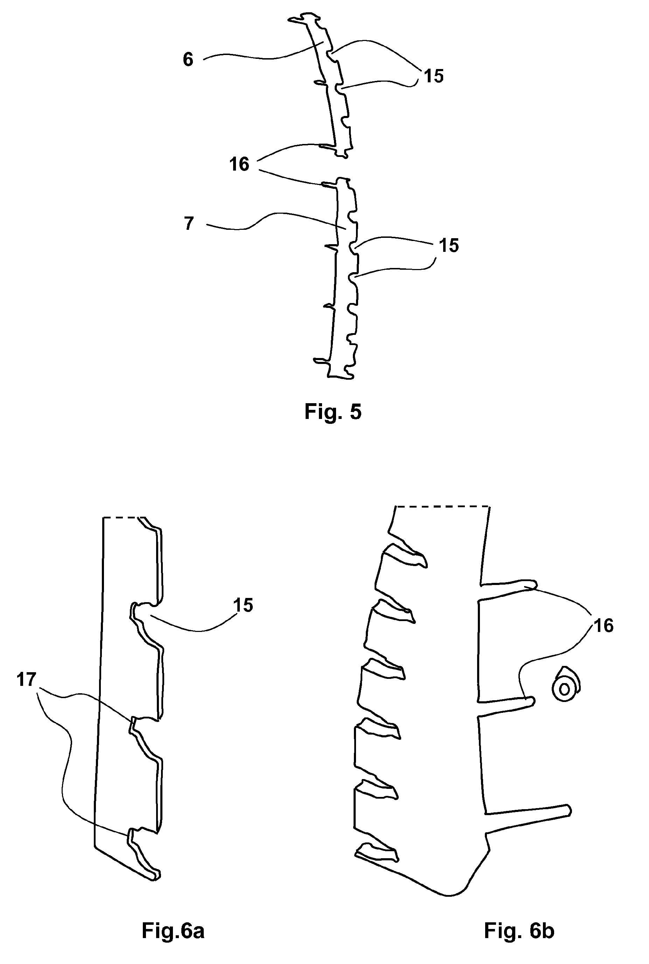

La figure 5 représente de manière plus détaillée les éléments de maintien 6 et 7 utilisés pour maintenir les éléments de guide de lumière. Avantageusement, ces éléments de maintien sont des entretoises. On comprendra ici par entretoise, une pièce verticale placée entre deux éléments parallèles qui tendent à se rapprocher et perpendiculairement à ceux-ci.

Ces entretoises 6, 7 comprennent chacune, sur leur face avant, des empreintes 15 dans lesquelles viennent se positionner les éléments de guide de lumière. Sur leur face arrière, des pattes de fixation 16 sont prévues pour attacher ces entretoises sur une partie du feu, à savoir de préférence le réflecteur correspondant.

La figure 6a représente une vue détaillée en perspective de la face avant d'une entretoise de la figure 5. Sur cette figure, on s'intéressera plus particulièrement à la forme des empreintes 15 dessinées dans la ou les entretoises. Ces empreintes sont destinées à recevoir les éléments de guide de lumière pour les maintenir en vue d'éviter tout affaissement et toute vibration de ces derniers lors des phases de roulage du véhicule. Dans ce but, il est important de prévoir un écartement de l'empreinte correspondant exactement à celui d'un élément de guide de lumière. A cet effet, les éléments de guide de lumière sont de préférence de section sensiblement circulaire. Ces éléments sont fixés dans leurs empreintes respectives, par une mise en contrainte. Pour faciliter le montage de ces éléments de guide dans leur empreinte, il est astucieusement prévu une zone de flexibilité 17 à l'arrière des empreintes, de sorte que lors de l'emmanchement de chaque élément de guide dans son empreinte définie sur l'entretoise, les parois de l'empreinte s'écartent légèrement. Cette zone de flexibilité 17 peut être réalisée sous la forme d'une encoche pratiquée à l'extrémité intérieure de chaque empreinte.

La figure 6b représente une vue détaillée en perspective de la face arrière d'une entretoise de la figure 5. L'entretoise (ou les entretoises) est fixée sur le réflecteur du feu par l'intermédiaire de petites pattes de fixation 16 directement issues de celle-ci par moulage, ces pattes viennent s'introduire dans des trous de passage définis en vis-à-vis sur le réflecteur correspondant. Ces pattes de fixation sont de préférence coniques, de sorte à permettre un ajustement précis de leur positionnement dans les trous de passage du réflecteur. Lorsque toutes les pattes de l'entretoise ont été introduites dans le réflecteur, les pattes sont bouterolées (cf. agrandissement de la figure 6b), i.e. leur extrémité est fondue à l'arrière du réflecteur, ce qui permet une bonne tenue de l'entretoise sur le réflecteur.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Feu (20) pour véhicule comprenant plusieurs éléments de guide de lumière (1 ; 11, 12) s'étendant en direction horizontale, agencés les uns en dessous des autres, et fixés à une partie (21 ; 13, 14) du feu aux extrémités (2, 3) des éléments de guide de lumière, **caractérisé en ce qu'**il est prévu au moins un élément de maintien (6, 7) d'au moins certains éléments de guide de lumière entre leurs extrémités.

2. Feu (20) selon la revendication 1, **caractérisé en ce que** l'élément de maintien (6, 7) est positionné à l'arrière des éléments de guide de lumière (11, 12) par rapport à la direction d'éclairage du feu.

3. Feu (20) selon la revendication 2, dans lequel les éléments de guide de lumière (11, 12) sont courbes en direction horizontale et **caractérisé en ce que** l'élément de maintien (6, 7) est positionné au niveau de la zone de concavité (10) des éléments de guide de lumière.

4. Feu (20) selon l'une des revendications 1 à 3, **caractérisé en ce que** l'élément de maintien (6, 7) comprend des empreintes (15) dans lesquelles viennent se positionner les éléments de guide de lumière (11, 12).

5. Feu (20) selon la revendication 4, **caractérisé en ce que** les empreintes (15) comprennent à leur extrémité intérieure une encoche (17).

6. Feu (20) selon l'une des revendications précédentes, dans lequel est agencé un réflecteur (21 ; 13, 14), **caractérisé en ce que** le réflecteur comprend des trous de passage et **en ce que** l'élément de maintien (6, 7) comprend des pattes de fixation (16) coniques venant se fixer dans les trous de passage du réflecteur.

7. Feu (20) selon la revendication 6, **caractérisé en ce que** les pattes de fixation (16) sont bouterollées après insertion.

8. Feu (20) selon l'une des revendications précédentes, dans lequel les éléments de guide de lumière (11, 12) sont en décalage et en gradin les uns par rapport aux autres dans la direction verticale, **caractérisé en ce que** deux éléments de maintien (6, 7) sont prévus, un premier élément de maintien (6) des éléments de guide de lumière supérieurs (11) et un deuxième élément de maintien (7) des éléments de guide de lumière inférieurs (12).

9. Feu (20) selon l'une des revendications précédentes, **caractérisé en ce que** la partie du feu, sur laquelle sont fixés les éléments de guide de lumière, est le réflecteur (21 ; 13, 14).

10. Feu (20) selon l'une des revendications précédentes, **caractérisé en ce que** les éléments de guide de lumière (11, 12) sont solidaires deux par deux à leurs extrémités (2, 3) par l'intermédiaire d'éléments de liaison (4, 5).

11. Feu (20) selon l'une des revendications précédentes **caractérisé en ce que** des diodes électroluminescentes sont positionnées à une extrémité des éléments de guide de lumière (11, 12).

12. Feu (20) selon l'une des revendications précédentes, **caractérisé en ce que** chaque élément de maintien (6, 7) est réalisé sous la forme d'une entretoise venant maintenir au moins deux éléments de guide de lumière.
